Europäisches Patentamt

(19) European Patent Office

Office européen des brevets

(11) Numéro de publication : **0 443 941 A1**

(12) # DEMANDE DE BREVET EUROPEEN

(21) Numéro de dépôt : **91400440.3**

(51) Int. Cl.⁵ : **G11B 5/37**

(22) Date de dépôt : **19.02.91**

(30) Priorité : **21.02.90 FR 9002113**

(43) Date de publication de la demande :
**28.08.91 Bulletin 91/35**

(84) Etats contractants désignés :
**BE CH DE GB IT LI NL**

(71) Demandeur : **COMMISSARIAT A L'ENERGIE
ATOMIQUE
31-33, rue de la Fédération
F-75015 Paris (FR)**

(72) Inventeur : **Fedeli, Jean-Marc
Le Mollard
F-38140 Beaucroissant (FR)**

(74) Mandataire : **Mongrédien, André et al
c/o BREVATOME 25, rue de Ponthieu
F-75008 Paris (FR)**

(54) **Tête magnétique horizontale à effet hall et son procédé de réalisation.**

(57)    Tête magnétique hozirontale à effet HaLL comprenant un circuit magnétique composé d'une première pièce polaire (42) horizontale et d'une deuxième pièce polaire hozirontale en deux parties (98, 100) séparées par un espaceur amagnétique (102), deux piliers magnétiques reliant chacune des parties (98, 100) de la deuxième pièce polaire à une extrémité de la première pièce polaire (42).
    Selon L'invention, au moins un des piliers comporte un capteur à effet Hall intégré (78, 80).
    Application à la lecture et l'écriture d'enregistrement magnétique.

FIG.11

# TETE MAGNETIQUE HORIZONTALE A EFFET HALL ET SON PROCEDE DE REALISATION

La présente invention a pour objet une tête magnétique horizontale à effet Hall et son procédé de réalisation. Elle s'applique notamment à la lecture d'un enregistrement sur un support magnétique, mais aussi à l'écriture sur un tel support.

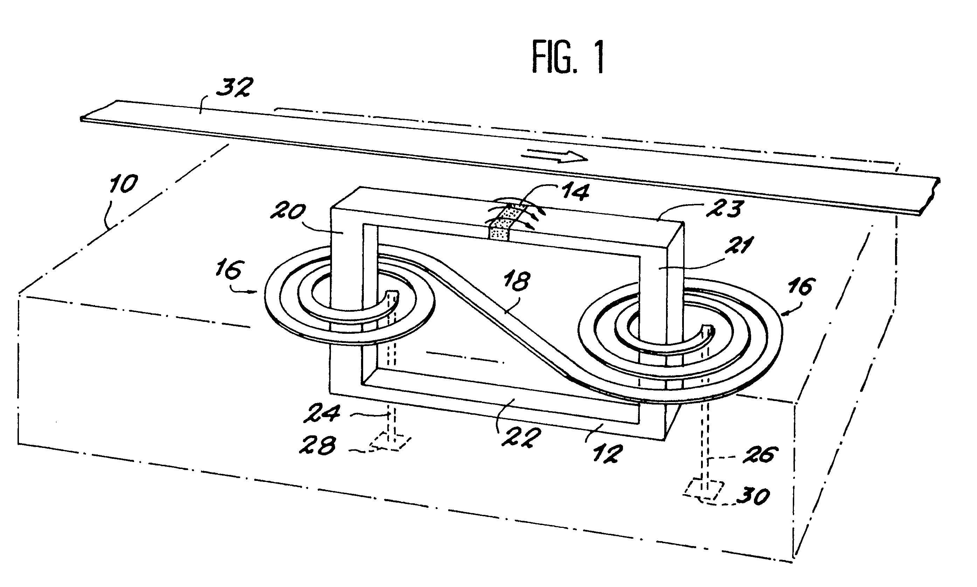

La structure d'une tête horizontale d'écriture et de lecture pour enregistrement longitudinal est rappelée figure 1. Dans un substrat semiconducteur 10 sont déposées et gravées diverses couches (dont les dimensions relatives n'ont pas été respectées pour plus de clarté) pour former un circuit magnétique 12 avec entrefer comblé par un espaceur amagnétique 14 et un bobinage conducteur 16. Ce bobinage 16 comprend deux séries d'enroulements reliées entre elles par une liaison 18 ; chacune de ces séries est enroulée autour d'un pilier magnétique 20, 21. Ces piliers magnétiques 20, 21 relient les première et seconde pièces polaires horizontales 22, 23 du circuit 12.

Le bobinage 16 est relié à ses deux extrémités, grâce à des liaisons 24, 26 traversant le substrat 10, à des plots de contact 28, 30 disposés sur la face inférieure du substrat.

La piste à écrire et/ou à lire 32 défile au-dessus de l'entrefer.

De telles têtes sont décrites, sous des modes de réalisation divers, dans les documents de brevets européens EP-A-152 326 et EP-A-262 028.

A côté de cette technologie connue en couches minces s'est développée une technique utilisant les propriétés des matériaux à effet Hall. De tels matériaux permettent de réaliser des têtes de lecture pour pistes d'enregistrement très étroites.

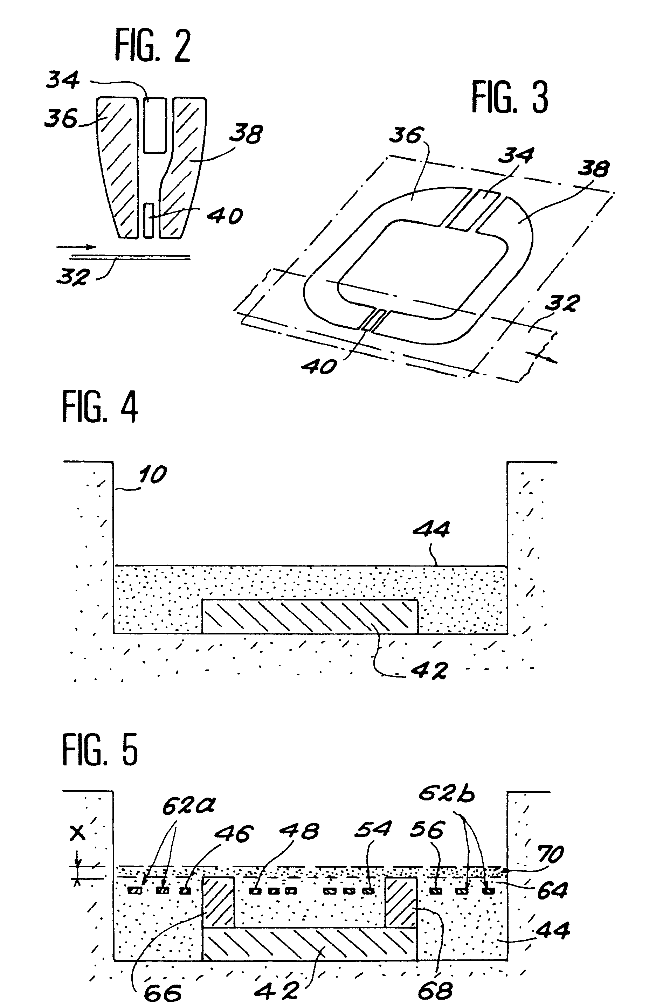

On connaît par le document FR 2 518 792 une tête magnétique verticale utilisant un capteur à effet Hall. Une telle tête magnétique est représentée schématiquement sur la figure 2. Comme on peut le voir sur cette figure, le capteur à effet Hall 34 est disposé dans un espace situé entre deux pièces polaires 36, 38. Ces pièces polaires 36, 38 sont placées verticalement par rapport au support d'enregistrement magnétique 32 et sont séparées au niveau de la partie de la tête proche du support par un espaceur amagnétique 40.

Une telle tête magnétique ne comporte qu'un capteur à effet Hall unique ; elle subit donc des dérives thermiques ou électroniques qui doivent être compensées par ailleurs.

La figure 3 représente schématiquement une autre tête magnétique verticale connue et comportant un capteur à effet Hall. Cette tête magnétique est décrite en détail dans le document US 3 800 193.

Les pièces polaires 36, 38 se rejoignent à chacune de leurs extrémités. Elles sont séparées d'une part par un espaceur amagnétique 40 au niveau de la partie des pièces polaires en regard du support d'enregistrement magnétique 32 et d'autre part par le capteur à effet Hall 34.

Cette tête magnétique présente les mêmes inconvénients que la précédente.

L'objet de la présente invention est de fournir une tête magnétique horizontale qui comprend au moins un capteur à effet Hall et qui offre la possibilité de pallier ces problèmes de dérive par une simple mesure différentielle.

De manière précise, la présente invention concerne une tête magnétique horizontale à effet Hall comprenant, contenus dans un caisson formé dans un substrat semiconducteur, une première pièce polaire horizontale, une seconde pièce polaire horizontale en deux parties séparées par un espaceur amagnétique, un premier pilier magnétique reliant la première pièce polaire à une partie de la seconde pièce polaire, un second pilier magnétique reliant la première pièce polaire à l'autre partie de la seconde pièce polaire, caractérisée en ce qu'au moins un des piliers comporte un capteur à effet Hall. La position des capteurs dans la hauteur des piliers est indifférente pour le fonctionnement de la tête.

La tête magnétique de l'invention est horizontale : elle comporte deux piliers magnétiques pouvant intégrer chacun un capteur à effet Hall. La présence de deux capteurs permet d'effectuer simplement une mesure différentielle des signaux de lecture d'un support magnétique enregistré délivrés par chacun des capteurs et d'obtenir un signal débarrassé de toute dérive. De plus, ce signal est d'intensité double du signal délivré par un capteur unique.

De manière avantageuse, dans le cas où chaque pilier comporte un capteur à effet Hall, ces capteurs sont connectés par des sorties aux entrées d'un circuit différentiel délivrant un signal de lecture sur une sortie.

L'invention apporte un avantage supplémentaire : il est possible d'intégrer sur une seule et même tête à la fois des moyens de lecture (dont le ou les capteurs à effet Hall font partie) et des moyens d'écriture, ces moyens de lecture et d'écriture utilisant le même circuit magnétique. Dans ce cas, la tête magnétique selon l'invention comprend, en outre, un bobinage conducteur entourant les deux piliers magnétiques.

L'invention a également pour objet un procédé de réalisation de la tête qui vient d'être définie. Selon ce procédé, à l'intérieur d'un caisson formé dans un substrat semiconducteur,

— on forme la première pièce polaire horizontale,
— on dépose une première couche isolante,
— on forme quatre plots conducteurs au voisinage d'au moins une des extrémités de la première pièce polaire horizontale, ces plots étant aptes à être connectés à l'extérieur du substrat,

– on dépose une deuxième couche isolante sur l'ensemble,

– on grave dans l'ensemble des couches isolantes deux ouvertures atteignant les extrémités de la première pièce polaire horizontale,

– on comble ces ouvertures avec un matériau magnétique pour constituer deux demi-piliers magnétiques affleurant la surface de la seconde couche isolante,

– on dépose une troisième couche isolante sur l'ensemble,

– on grave dans les deuxième et troisième couches isolantes des ouvertures atteignant les plots conducteurs,

– on dépose sur l'ensemble une couche de matériau à effet Hall,

– on grave cette couche de matériau à effet Hall de manière à définir la forme de chacun des capteurs à effet Hall,

– on dépose une quatrième couche isolante sur l'ensemble,

– on réalise deux demi-piliers magnétiques noyés dans une cinquième couche isolante, ces demi-piliers se situant à l'aplomb des demi-piliers déjà formés,

– on réalise la seconde pièce polaire magnétique horizontale noyée dans une sixième couche isolante.

Pour réaliser une tête de lecture mais aussi d'écriture, on constitue en outre un bobinage conducteur entourant les deux piliers magnétiques lors de l'étape de réalisation des plots conducteurs.

Les plots conducteurs ainsi que les extrémités du bobinage (dans le cas d'une tête de lecture/écriture) sont reliés par des liaisons métalliques à l'extérieur du substrat. Ces liaisons métalliques sont obtenues de façon classique soit par gravure de la face arrière du substrat et de la première couche isolante et métallisation des trous gravés par exemple avant l'étape de formation des plots conducteurs, soit par gravure face avant des sixième, cinquième et quatrième couches isolantes et métallisation des trous gravés, à la fin du procédé de fabrication.

Les caractéristiques et avantages de l'invention apparaîtront mieux à la lecture de la description qui suit, d'exemples de réalisation donnés à titre explicatif et nullement limitatif. Cette description se réfère à des dessins annexés sur lesquels :

– la figure 1, déjà décrite, représente schématiquement une tête magnétique horizontale selon l'art antérieur,

– la figure 2, déjà décrite, représente schématiquement une tête magnétique à effet Hall, selon l'art antérieur,

– la figure 3, déjà décrite et relative à l'art antérieur, représente schématiquement une autre tête magnétique à effet Hall,

– la figure 4 montre une première étape d'un procédé de réalisation de la tête selon l'invention,

– la figure 5 montre une seconde étape de ce procédé,

– la figure 6 représente schématiquement et partiellement une vue de dessus du dispositif après la seconde étape,

– la figure 7 représente schématiquement une troisième étape de ce procédé,

– la figure 8 montre une quatrième étape de ce procédé,

– la figure 9 représente schématiquement une vue de dessus d'un capteur à effet Hall,

– la figure 10 représente schématiquement une cinquième étape du procédé,

– la figure 11 représente schématiquement une vue en coupe d'une tête magnétique à effet Hall conforme à l'invention,

– la figure 12a illustre la circulation des lignes de champ magnétique à l'intérieur du circuit magnétique, et

– la figure 12b représente schématiquement les capteurs à effet Hall reliés à un circuit différentiel conformément à un mode de réalisation de l'invention.

Sur la figure 4, on a représenté une vue en coupe d'un substrat semiconducteur 10, par exemple en silicium, dans lequel a été gravé un caisson. Comme décrit par exemple dans le document EP-A-0 262 028, on fait croître au fond de ce caisson, par électrolyse, une couche magnétique horizontale 42 par exemple en FeNi formant une première pièce polaire du circuit magnétique.

La première pièce polaire 42 est recouverte d'une couche isolante 44, par exemple en $SiO_2$.

Les étapes suivantes du procédé de réalisation d'une tête magnétique conforme à l'invention sont décrites en relation avec la figure 5 qui représente une coupe de la tête.

Sur la première couche isolante 44 sont déposés, au voisinage et de préférence autour de chaque extrémité de la première pièce polaire 42, quatre plots conducteurs (seuls les plots 46, 48 et 54, 56 sont représentés sur la coupe) entourés des enroulements d'un bobinage conducteur. Ce bobinage est formé de deux séries d'enroulements 62a et 62b reliées entre elles.

L'ensemble est recouvert d'une deuxième couche isolante 64, par exemple en $SiO_2$, qui est gravée sélectivement de façon classique pour former deux ouvertures, en regard des extrémités de la première pièce polaire. Ces ouvertures sont comblées, par dépôt électrolytique par exemple, pour former deux demi-piliers magnétiques 66, 68, par exemple en FeNi, affleurant la surface de la deuxième couche isolante 64.

L'ensemble est recouvert par une couche isolante 70, par exemple en $SiO_2$, d'épaisseur X de préférence faible, par exemple 0,2 micromètre.

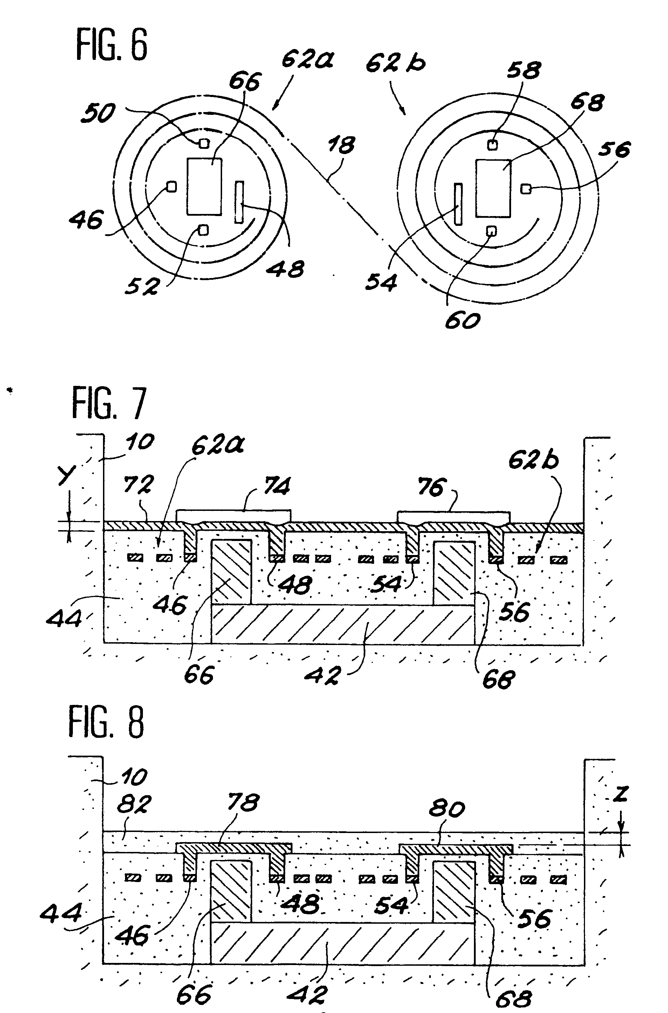

La figure 6 représente une vue de dessus partielle du dispositif après la réalisation des opérations précédemment décrites. On voit sur cette figure que le demi-pilier 66 est entouré par les plots conducteurs 46, 48, 50, 52 et que le demi-pilier 68 est entouré par les plots conducteurs 54, 56, 58, 60.

Les plots 48 et 54 intérieurs au circuit magnétique présentent une forme de bande allongée de manière à permettre une prise de contact sans avoir à traverser la première pièce polaire 42 comme on le verra plus précisément plus loin.

Chaque série 62a et 62b du bobinage comporte une dizaine d'enroulements par exemple.

La figure 7 montre le résultat des étapes suivantes du procédé de réalisation sur une vue en coupe. Par photolithographie et gravure, des ouvertures sont pratiquées dans les couches isolantes 64 et 70. Ces ouvertures atteignent les plots conducteurs 46, 48, 50, 52, 54, 56, 58, 60.

On dispose sur l'ensemble une couche 72 de matériau à effet Hall, par exemple InSb, d'épaisseur Y égale, par exemple, à 1 micromètre. Ce dépôt s'effectue par exemple par pulvérisation cathodique.

La forme des capteurs est définie par photolithographie et gravure. Sur la figure 7, on a représenté le masque de résine 74, 76 permettant de définir la forme des capteurs lors de la gravure.

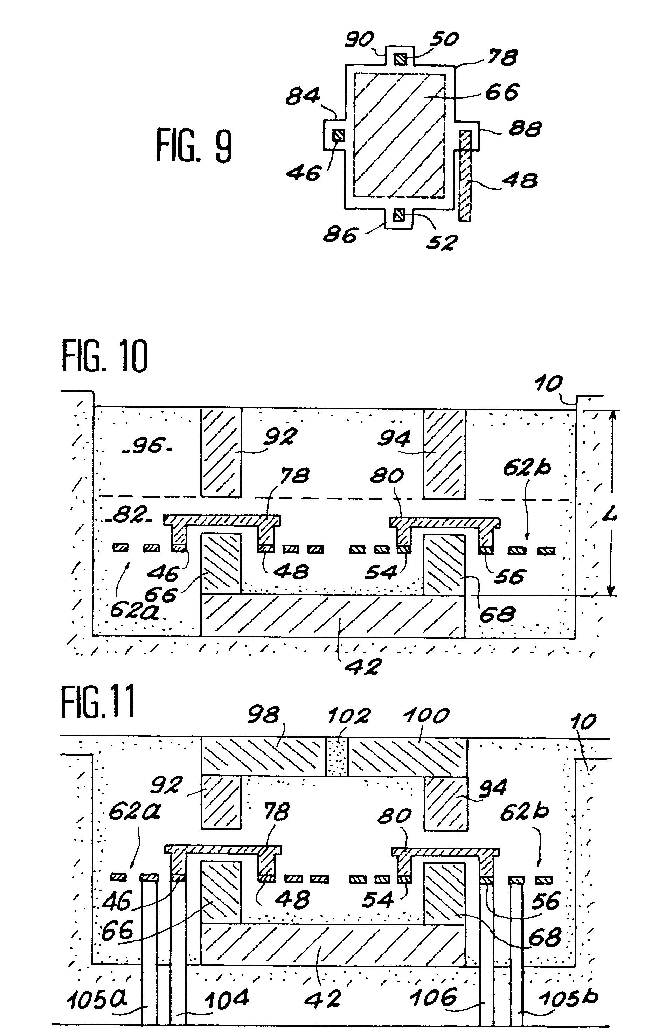

La figure 8 représente schématiquement le résultat des étapes suivantes du procédé de réalisation. Les capteurs 78 et 80 sont gravés de manière à être intégrés aux piliers magnétiques. Ils sont reliés aux plots conducteurs de part et d'autre des demi-piliers 66, 68.

Une quatrième couche isolante 82, par exemple en $SiO_2$, d'épaisseur Z égale par exemple à 0,2 micromètre à l'aplomb des capteurs, est déposée sur l'ensemble.

La figure 9 représente schématiquement une vue de dessus d'un capteur à effet Hall intégré dans un pilier magnétique.

Le capteur 78 représenté présente des dimensions sensiblement supérieures à la section du demi-pilier 66. Le capteur 78 est en outre muni de pattes débordantes 84, 86, 88, 90 pour les contacts avec les plots conducteurs 46, 52, 48 et 50, respectivement.

La figure 10 illustre schématiquement le résultat des étapes suivantes du procédé. On réalise les demi-piliers supérieurs 92 et 94 à l'aplomb des demi-piliers 66 et 68 respectivement. Les demi-piliers sont par exemple en FeNi.

Ces demi-piliers 92 et 94 sont réalisés dans des ouvertures pratiquées dans une cinquième couche isolante 96 par exemple en $SiO_2$ déposée au préalable sur l'ensemble soit par pulvérisation cathodique par exemple de FeNi dans cette cinquième couche et surfaçage, soit par électrolyse.

Dans ce dernier cas, on dépose par exemple au préalable sur la cinquième couche isolante munie de ces ouvertures, un matériau conducteur par exemple par pulvérisation cathodique puis on réalise une électrolyse du matériau magnétique choisi en utilisant le matériau conducteur comme électrode et on effectue enfin un surfaçage de l'ensemble afin de former les piliers.

La hauteur totale L des piliers est égale par exemple à 10 micromètres.

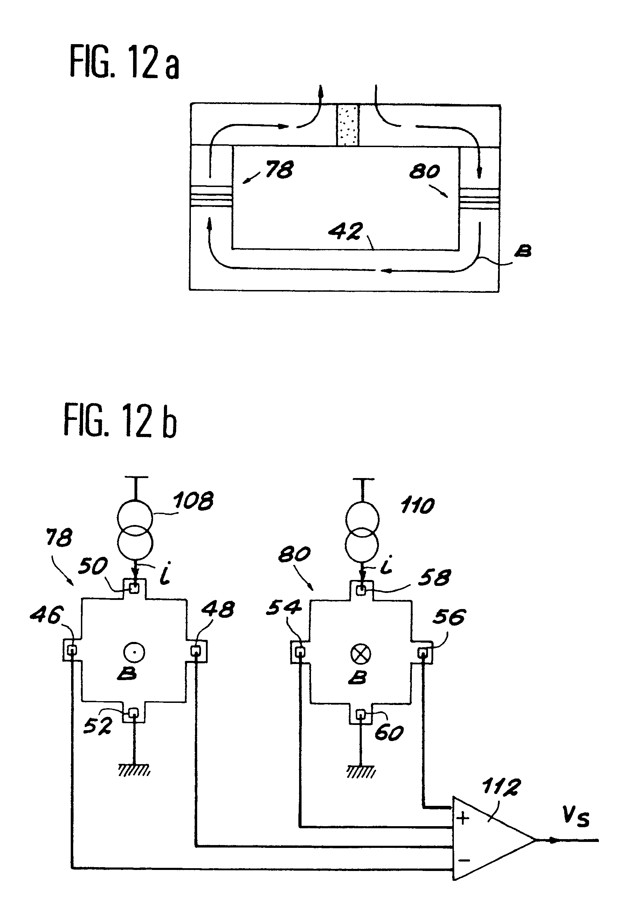

La figure 11 représente schématiquement en coupe, une tête magnétique conforme à l'invention à l'issue du procédé de réalisation.

Une pièce polaire supérieure par exemple en FeNi en deux parties 98, 100 séparées par un espaceur amagnétique 102 est réalisée par exemple conformément à la technique décrite dans le document EP-A-0 262 028 (figures 5j, 5k, 5l, 5m).

On voit sur la figure 11 que le substrat 10 et la première couche isolante 44 sont percés d'ouvertures (deux seulement référencées 104 et 106 sont visibles sur la vue en coupe) permettant l'accès aux plots conducteurs par l'arrière de la tête magnétique. Ces ouvertures permettent de connecter de façon classique les capteurs 78, 80 d'une part à des moyens de traitement tels qu'un circuit différentiel et d'autre part à un circuit d'alimentation électrique.

D'autres ouvertures 105a et 105b sont percées pour permettre la réalisation des liaisons entre le bobinage et des moyens d'alimentation (non représentés). Un exemple de réalisation de ces liaisons est décrit dans le document "Electrical connexion through silicon wafer" paru dans Journal of Electrochemical Society - Fall Meeting, Chicago, 9 au 14 Octobre 1988.

Les capteurs à effet Hall ne sont utilisés que pour la lecture d'un signal magnétique enregistré sur un support défilant parallèlement à la seconde pièce polaire horizontale.

Comme on le voit sur la figure 12a, les lignes de champ magnétique B issues du signal se referment à l'intérieur du circuit magnétique (formé par les pièces polaires et les piliers) en traversant les capteurs 78 et 80 dans des sens opposés.

Comme on peut le voir sur la figure 12b, les capteurs 78 et 80 sont alimentés en courant par des générateurs de courant 108, 110 respectivement reliés aux plots 50 et 58. Les plots 52 et 60 sont mis à la masse.

La tension Hall due à la traversée des capteurs par les lignes du champ magnétique B est mesurée entre les plots 46, 48 pour le capteur 78 et 54, 56 pour le capteur 80. Ces tensions comprennent chacune une composante Hall due à la traversée des capteurs par les lignes de champ magnétique.

Les tensions comprennent aussi une composante due au bruit qui s'ajoute à la composante Hall de l'un des capteurs et qui se retranche à la composante Hall de l'autre des capteurs.

La tension Hall délivrée par le capteur 80 est appliquée sur les entrées (+) d'un circuit différentiel 112. La tension Hall délivrée par le capteur 78 est appliquée sur les entrées (-) de ce circuit 112. Ce dernier délivre un signal de sortie VS ayant non seulement une amplitude double des signaux délivrés par chaque capteur mais aussi débarrassée de tout bruit et en particulier de toute dérive thermique ou autre éliminée lors de la différentiation. Ces composantes Hall sont égales mais de signes opposés.

La tête magnétique à effet Hall conforme à l'invention permet donc bien d'obtenir un signal de lecture d'amplitude importante et débarrassé des bruits dûs aux dérives. A titre d'exemple, on peut citer les caractéristiques suivantes :

. Sensibilité à un champ magnétique des capteurs à effet Hall en couches minces : environ 40 mV/mA.kGauss.

. Amplitude du champ traversant les entrefers secondaires formés au niveau des capteurs à effet Hall : environ ± 10 Gauss (avec une polarisation usuelle des capteurs de 2 mA).

. Tension Hall recueillie aux bornes d'un capteur : environ 1,4 mVpp.

. Amplitude du signal de lecture après différentiation Vs : environ 2,8 mVpp.

Ce dernier chiffre représente un gain d'environ 20 par rapport aux têtes inductives utilisant un bobinage de lecture. En outre, lorsque la tête est utilisée pour l'écriture, l'invention utilise un bobinage, de préférence à faible nombre de tours (par exemple 10) pour obtenir un circuit magnétique réduit afin de compenser les pertes d'efficacité de la tête à l'écriture dues aux entrefers secondaires réalisés dans les piliers pour incorporer les capteurs à effet Hall.

Il va de soi que l'invention ne se limite nullement à l'exemple de réalisation plus spécialement décrit et représenté ; elle en admet au contraire toutes les variantes. En particulier dans l'exemple de réalisation présenté ci-dessus, la tête magnétique à effet Hall est utilisable pour la lecture mais aussi pour l'écriture grâce au bobinage 62a, 62b. Pour obtenir une tête de lecture seule, il suffit d'omettre ce bobinage lors du procédé de réalisation.

Par ailleurs, les dépôts des divers matériaux magnétiques sont ici de type électrolytique mais on peut utiliser tout autre type de dépôt.

Enfin, le dispositif présenté comporte deux capteurs à effet Hall (un dans chaque pilier) mais un dispositif ne comportant qu'un seul capteur à effet Hall intégré dans l'un des deux piliers appartient au cadre de la présente invention.

**Revendications**

1. Tête magnétique horizontale à effet Hall comprenant, contenus dans un caisson formé dans un substrat semiconducteur (10), une première pièce polaire horizontale (42), une seconde pièce polaire horizontale en deux parties (98, 100) séparées par un espaceur amagnétique (102), un premier pilier magnétique (66, 92) reliant la première pièce polaire (42) à une partie (98) de la seconde pièce polaire, un second pilier magnétique (68, 94) reliant la première pièce polaire (42) à l'autre partie (100) de la seconde pièce polaire, caractérisée en ce qu'au moins un des piliers comporte un capteur à effet Hall (78, 80).

2. Tête magnétique selon la revendication 1, caractérisée en ce que chaque pilier comporte un capteur à effet Hall, ces capteurs (78, 80) sont connectés par des sorties aux entrées d'un circuit différentiel (112) délivrant un signal de lecture sur une sortie.

3. Tête magnétique selon la revendication 1, caractérisée en ce qu'elle comprend, en outre, un bobinage conducteur (62a, 62b) entourant les deux piliers magnétiques.

4. Procédé de réalisation d'une tête magnétique horizontale à effet Hall, caractérisé en ce qu'il comprend les opérations suivantes : à l'intérieur d'un caisson formé dans un substrat semiconducteur (10),

– on forme la première pièce polaire horizontale (42),

– on dépose une première couche isolante (44),

– on forme quatre plots conducteurs (46, 48, 50, 52, 54, 56, 58, 60) au voisinage d'au moins une des extrémités de la première pièce polaire horizontale (42), ces plots étant aptes à être connectés à l'extérieur du substrat,

– on dépose une deuxième couche isolante (64) sur l'ensemble,

– on grave dans l'ensemble des couches isolantes (44, 64) deux ouvertures atteignant les extrémités de la première pièce polaire horizontale,

– on comble ces ouvertures avec un matériau magnétique pour constituer deux demi-piliers magnétiques (66, 68) affleurant la surface de la seconde couche isolante (64),

– on dépose une troisième couche isolante (70) sur l'ensemble,

– on grave dans les deuxième et troisième couches isolantes (64, 70) des ouvertures atteignant les plots conducteurs (46, 48 50, 52, 54, 56, 58, 60),

– on dépose sur l'ensemble une couche (72) de matériau à effet Hall,

– on grave cette couche (72) de matériau à effet Hall de manière à définir la forme de chacun des capteurs à effet Hall (78, 80),

– on dépose une quatrième couche isolante (82) sur l'ensemble,

– on réalise deux demi-piliers magnétiques noyés (92, 94) dans une cinquième couche isolante, ces demi-piliers (92, 94) se situant à l'aplomb des demi-piliers (66, 68) déjà formés,

– on réalise la seconde pièce polaire magnétique horizontale (98, 100 102) noyée dans une sixième couche isolante.

5. Procédé selon la revendication 4, caractérisé par le fait qu'on constitue en outre un bobinage (62a, 62b) conducteur entourant les deux piliers magnétiques lors de l'étape de réalisation des plots conducteurs.

# FIG. 1

EP 0 443 941 A1

## FIG. 2

## FIG. 3

## FIG. 4

## FIG. 5

# FIG. 6

# FIG. 7

# FIG. 8

FIG. 9

FIG. 10

FIG. 11

FIG. 12 a

FIG. 12 b

Office européen
des brevets

**RAPPORT DE RECHERCHE EUROPEENNE**

Numéro de la demande

EP 91 40 0440

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-3800193 (ASHAR ET AL.)<br>* colonne 4, lignes 60 - 68 *<br>* colonne 5, lignes 6 - 52; figures 8A, 9A-9H * | <br><br>1, 4 | G11B5/37 |
| A | US-A-3355727 (GAUBATZ)<br>* colonne 1, ligne 68 - colonne 2, ligne 18 *<br>* colonne 2, lignes 40 - 64; figures 1, 2 * | <br><br>1 | |
| A | GB-A-970455 (PHILIPS ELECTRONIC AND ASSOCIATED INDUSTRIES LTD. ET AL.)<br>* page 1, ligne 56 - page 2, ligne 26; figures 1, 2 * | 1, 2 | |
| A | EP-A-0284495 (COMMISSARIAT A L'ENERGIE ATOMIQUE)<br>* colonne 1, lignes 50 - 59 *<br>* colonne 3, lignes 39 - 50; revendications 1-3; figure 8 * | <br><br>1, 2 | |
| A | IBM TECHNICAL DISCLOSURE BULLETIN.<br>vol. 12, no. 12, mai 1970, ARMONK,N.Y.,USA<br>page 2163 _T:W. COLLINS et al.:<br>"ELIMINATION OF DC OFFSET POTENTIAL OF HALL EFFECT DEVICES" | | **DOMAINES TECHNIQUES RECHERCHES (Int. Cl.5)**<br><br>G11B |
| A | EP-A-0269129 (NEC CORP.) | | |

Le présent rapport a été établi pour toutes les revendications

| Lieu de la recherche | Date d'achèvement de la recherche | Examinateur |
|---|---|---|
| LA HAYE | 29 MAI 1991 | FUX J. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................
& : membre de la même famille, document correspondant

EPO FORM 1503 03.82 (P0402)